# EUROPÄISCHE PATENTSCHRIFT

(11) **EP 1 541 912 B1**
(45) Veröffentlichungstag und Bekanntmachung des Hinweises auf die Patenterteilung: **08.08.2007**
(21) Anmeldenummer: 04106426.2
(22) Anmeldetag: 09.12.2004
(51) Int. Cl.: F16J 15/32, F16K 11/07

(54) **Ventilkolbenanordnung mit verbesserter Abdichtung**
Valve piston assembly with improved seal
Assemblage de piston avec étanchéité améliorée

(30) Priorität: 10.12.2003 DE 10357553
(43) Veröffentlichungstag der Anmeldung: 15.06.2005
(73) Patentinhaber: Bosch Rexroth AG, 70184 Stuttgart (DE)
(72) Erfinder: Kulmann, Erwin, 71706, Markgröningen (DE); Troltsch, Karl, 71701, Schwieberdingen (DE)
(74) Vertreter: Kietzmann, Lutz

(56) Entgegenhaltungen:
- DE-A1- 2 033 058
- DE-A1- 2 908 631
- DE-C- 317 367
- FR-A- 768 772
- US-A- 3 287 022
- US-A- 4 195 849
- US-A- 5 865 442

## Beschreibung

Die vorliegende Erfindung betrifft eine Ventilkolbenanordnung, umfassend einen Ventilkolben und eine Dichtung, wobei der Ventilkolben einen Ventilkolbendichtungsaufnahmebereich besitzt, der der Dichtung im montierten Zustand zugeordnet ist, und die Dichtung mindestens eine äußere und eine innere Dichtlippe besitzt.

Das Einsatzgebiet der Erfindung betrifft das Gebiet der Ventilschieber, insbesondere bei Ventilen mit bistabiler Ventilcharakteristik.

Aus dem Stand der Technik sind allgemein Dichtungen für Ventilkolben bei Sitz- und Schieberventilen bekannt, die zwischen Kolbenraum und Druckraum abdichten und so einen reibungslosen Betrieb des Ventils ermöglichen. Diese beinhalten im allgemeinen zwei Dichtlippen, wobei die innere Dichtlippe an den Ventilkolben anschließt, dessen dafür vorgesehener Ventilkolbendichtungsaufnahmebereich im allgemeinen zylindrisch geformt ist.

Insbesondere bei bistabilen Ventilen ergibt sich jedoch die Gefahr, dass aufgrund der unterschiedlichen Druckverhältnisse insbesondere bei etwas älteren Dichtungen diese unterströmt werden kann, d.h. dass Druckfluid zwischen der Dichtung und dem Ventilkolben strömen kann. Dieses wirkt sich jedoch überaus nachteilig auf die Ventilleistung aus, da der geregelte reibungslose Betrieb des Ventils verschlechtert wird und eventuell das Ventil sogar ganz ausfällt.

Aus der DE 317 367 C ist ein Kolbendichtring bekannt, die in einer Nut am Kolbenumfang einliegt. Dabei wird eine untere und eine obere Dichtkante vorgesehen, zwischen denen der Dichtring konkav eingeformt ist. Dabei entstehen quasi 2 redundante Dichtlinien in axialer Richtung, um das Dichtungsergebnis zu verbessern. Der Dichtring selbst besteht aus Metall, und hält aus diesem Grund natürlich dauerhaft diese Kontur, ohne dabei unter bestimmte Vorspannung gebracht werden zu müssen, Um die durch Reibung bewirkte Zerstörung zu vermeiden, werden Öle im Motor verwendet, so dass diese Dichtung reibungsarm gleiten kann. Eine solche Anordnung ist daher auf eine flexible Dichtung nicht übertragbar.

Es ist daher die Aufgabe der vorliegenden Erfindung, eine Ventilkolbenanordnung mit einem Ventilkolben und einer Ventildichtung zu schaffen, welche in der Lage ist, eine erhöhte Abdichtung zu schaffen.

Die Aufgabe wird erfindungsgemäß dadurch gelöst, dass bei Ventilkolbenanordnung, umfassend einen Ventilkolben und eine Dichtung, wobei der Ventilkolben einen Ventilkolbendichtungsaufnahmebereich besitzt, der der Dichtung im montierten Zustand zugeordnet ist, und die Dichtung mindestens eine äußere und eine innere Dichtlippe besitzt, der Ventilkolbendichtungsaufnahmebereich zumindest in dem Bereich, der im montierten Zustand der inneren Dichtlippe zugeordnet ist, ein kegelstumpfartiges Profil aufweist, wobei der Durchmesser des Ventilkolbens in Richtung des Kolbenraums geringer wird, und die innere Dichtlippe in unmontiertem Zustand so unter Vorspannung steht, dass sie sich im montierten Zustand in Anlage an den kegelstumpfartigen Ventilkolbenabschnitt des Ventilkolbendichtungsaufnahmebereiches befindet.

Wie Versuche gezeigt haben, wird auf diese Weise eine enge Anlehnung der Dichtung an den Ventilkolben auf einfache Weise erreicht und ein Unterströmen der Dichtung insbesondere im drucklosem Zustand (bistabiler Schaltzustand) kann im wesentlichen vermindert, wenn nicht sogar ganz ausgeschlossen werden.

Eine bevorzugte Ausführungsform der vorliegenden Erfindung ist zusätzlich dadurch gekennzeichnet, dass der Ventilkolben einen sich in Richtung des Kolbenraumes an den kegelstumpfartigen Ventilkolbenabschnitt des Ventilkolbendichtungsaufnahmebereiches anschlie-ßenden stirnflächigen Absatz besitzt und dass die innere Dichtlippe der Dichtung so bemessen ist, dass sie in montiertem Zustand in im wesentlichen paralleler Richtung zum Ventilkolben kolbenraumseitig mit dem stirnflächigen Absatz abschließt. Hierzu wird ein besserer Sitz der Dichtung auf dem Ventilkolben erreicht, was die Abdichtung nochmals erhöht.

Eine weitere bevorzugte Ausführungsform der vorliegenden Erfindung ist zusätzlich dadurch gekennzeichnet, dass der Ventilkolben in Richtung des Druckraumes einen sich nach dem kegelstumpfartigen Ventilkolbenabschnitt anschließenden zylindrischen Ventilkolbenabschnitt sowie daran anschließend einen stirnflächigen Absatz besitzt, wobei die innere Dichtlippe der Dichtung so bemessen ist, dass sie in montiertem Zustand sich in im wesentlichen paralleler Richtung sich über den gesamten zylindrischen Ventilkolbenabschnitt erstreckt und druckraumseitig mit dem stirnflächigen Absatz abschließt. Auch hierdurch wird der Sitz der Dichtung auf dem Ventilkolben und somit die Abdichtung nochmals erhöht.

Eine Ventilanordnung gemäß der vorliegenden Erfindung ist in Ventilen, bevorzugt in Sitzund Schieberventilen einsetzbar.

Ein bevorzugtes erfindungsgemäßes Verfahren zur Herstellung eines Ventils, welches eine erfindungsgemäße Ventilanordnung umfasst ist dadurch gekennzeichnet, dass es die Schritte enthält, dass zunächst der Ventilkolben in den Ventilsitz eingeführt wird, anschließend die Dichtung in den Ventilkolben eingepresst wird und anschließend der Ventilkolben mit Ventilsitz und Dichtung in das Ventilgehäuse eingepresst wird.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in denen - beispielhaft - ein Ausführungsbeispiel der erfindungsgemäßen Ventilkolbenanordnung dargestellt sind. In den Zeichnungen zeigt: -
- Fig. 1: einen Längsschnitt durch ein Sitzventil mit zwei Ventilkolbenanordnungen gemäß einer Ausführungsform der vorliegenden Erfindung; sowie
- Fig. 2: eine Ausschnittsvergrößerung aus Fig. des durch "X" markierten Bereichs.

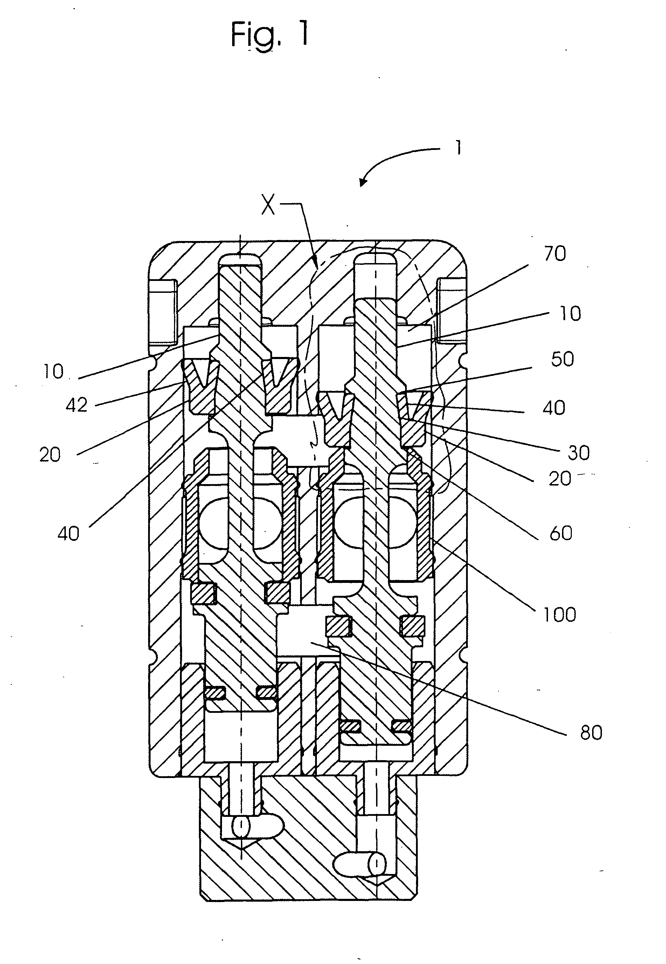

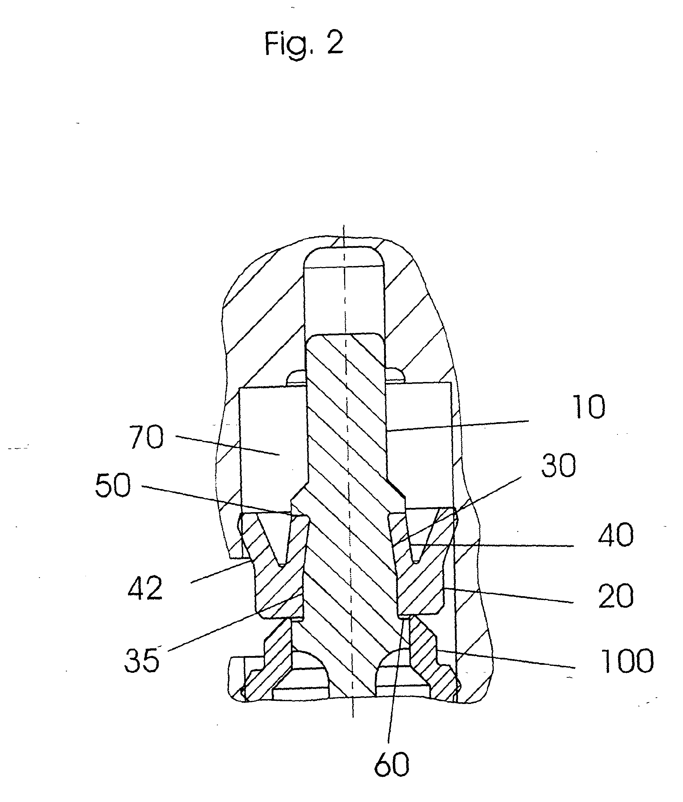

Fig. 1 zeigt einen Längsschnitt durch ein Sitzventil 1 mit zwei Ventilkolbenanordnungen gemäß einer Ausführungsform der vorliegenden Erfindung, Fig. 2 zeigt eine Ausschnittsvergrößerung aus Fig. 1 des durch "X" markierten Bereichs. An den Ventilkolben 10 sind jeweils zwei Dichtungen 20 angebracht, die sich über einen Ventilkolbendichtungsaufnahmebereich des Ventilkolbens 10 erstrecken. Dieser beinhaltet vorzugsweise einen kegelstumpfartigen Ventilkolbenabschnitt 30 und einen zylindrischer Ventilkolbenabschnitt 35 (s. Fig. 2). Die Dichtung 20 erstreckt sich dabei vorzugsweise längs des Ventilkolbens 10 um diesen herum über den gesamten Ventilkolbendichtungsaufnahmebereich. Sie ist - wie grundsätzlich aus dem Stand der Technik bekannt - als eine Art Nutring aufgebaut und umfasst eine innere Dichtlippe 40 und eine äußere Dichtlippe 42. Die innere Dichtlippe 40 ist dabei in unmontiertem Zustand so unter Vorspannung gesetzt (Vorpressung), dass sie sich im montierten Zustand in Anlage an den kegelstumpfartiger Ventilkolbenabschnitt 30 des Ventilkolbendichtungsaufnahmebereichs des Ventilkolbens 10 befindet, um ein Unterströmen von Druckfluid bei Betrieb des Zylinders zu verhindern. Vorzugsweise presst sich die innere Dichtlippe 40 eng an den Ventilkolbenabschnitt 30 an.

Vorzugsweise besitzt der Ventilkolben sowohl kolbenraumseitig wie druckraumseitig zwei Absätze oder Vorsprünge 50 bzw. 60. Dabei schließt die Dichtung 20 sowohl in Richtung des Kolbenraums 70 bevorzugt - ggf. unter etwas Spiel - mit dem Absatz 50 als auch in Richtung des Druckraums 80 bevorzugt - ggf. unter etwas Spiel - mit dem Absatz oder Vorsprung 60 ab. Somit wird zum einen eine weitere erhöhte Abdichtung erreicht, zum anderen ist auch der Sitz der Dichtung auf dem Ventilkolben nochmals erhöht.

Die erfindungsgemäßen Ventilkolbenanordnungen des Sitzventils 1 werden bevorzugt so zusammen- und in das Sitzventil 1 eingesetzt, dass zunächst der Ventilkolben 10 in den Ventilsitz 100 eingeführt, sowie anschließend die Dichtung 20 auf den Ventilkolben 10 aufgezogen wird. Da die innere Dichtlippe 40 zuvor unter geeignete Vorspannung /Vorpressung gesetzt wurde, liegt sie im montierten Zustand eng an dem Ventilkolbendichtungsaufnahmebereich, insbesondere an dem kegelstumpfartiger Ventilkolbenabschnitt 30 des Ventilkolbendichtungsaufnahmebereichs an. Anschließend wird der Ventilkolben 10 zusammen mit der Dichtung 20 und dem Ventilsitz 100 in das Sitzventil 1 eingesetzt.

Wird das Sitzventil 1 geschaltet, welches üblicherweise in einem kurzem Impuls (Impulsdauer ca. 20 ms) geschieht, wird der Kolben 10 in eine Schaltposition mit der Dichtung 20 am Ventilsitz 100 überführt (s. rechter Kolben in Fig. 1). In dieser Position erfolgt die Abdichtung im wesentlichen über den zylindrischen Teil 35 der Dichtung 20. Durch die Vorpressung der Dichtung 20 wird eine Undichtigkeit im drucklosen Zustand, welcher aufgrund der in dieser Position und in diesem Schaltzykluspunkt vorliegenden drucklosen Kolbenbeaufschlagung vorliegt, eine Undichtigkeit verhindert. Druckbeaufschlagt ist lediglich die Dichtung 20 am Sitz 100, da ein Ringspalt zwischen dem zylindrischen Teil 35 des Ventilkolbens 10 am Ventilsitz 100 existiert.

Durch den kegelstumpfartigen Ventilkolbenabschnitt 30 des Ventilkolbens 10 wird die Dichtung 20 besser an den stirnflächigen Absatz 50 abgestützt. Zum einen wird dadurch die abdichtende Fläche nochmals vergrößert, zum anderen entsteht daraus eine radiale Kraftkomponente, resultierend aus der Anpressung der Dichtung 20 an den Ventilsitz 100. Diese sorgt somit für erhöhte Abdichtung. Somit wird nachdrücklich verhindert, dass bei starkem Anzug im Druckraum 80, der je nach Anwendung bis zu 10 bar stark sein kann, die innere Lippe 40 über den stirnflächigen Absatz 50 des Ventilkolbens "herrüberrutscht" und/oder überstülpt, wodurch Undichtigkeiten entstehen würden.

### Bezugszeichenliste

- **1**: Sitzventil
- **10**: Ventilkolben
- **20**: Dichtung
- **30**: kegelstumpfartiger Ventilkolbenabschnitt
- **35**: zylindrischer Ventilkolbenabschnitt
- **40**: innere Dichtlippe
- **42**: äußere Dichtlippe
- **50**: kolbenraumseitiger Absatz
- **60**: druckraumseitiger Absatz
- **70**: Kolbenraum
- **80**: Druckraum
- **100**: Ventilsitz

## Patentansprüche

1. Ventilkolbenanordnung, umfassend einen Ventilkolben (10) und eine Dichtung (20), wobei der Ventilkolben (10) einen Ventilkolbendichtungsaufnahmebereich besitzt, der der Dichtung (20) im montierten Zustand zugeordnet ist, und die Dichtung (20) mindestens eine zylinderwandungsseitige (42) und eine ventilkolbenseitige (40) Dichtlippe besitzt, **dadurch gekennzeichnet, dass** der Ventilkolbendichtungsaufnahmebereich zumindest in einem Teilabschnitt, der im montierten Zustand der ventilkolbenseitigen Dichtlippe (40) zugeordnet ist, ein kegelstumpfartiges Profil aufweist, wobei der Durchmesser des Ventilkolbens in Richtung des Kolbenraumes (70) geringer wird, und die ventilkolbenseitige Dichtlippe (40) im unmontierten Zustand derart unter Vorspannung oder Vorpressung steht, dass sie sich im montierten Zustand in Anlage an den kegelstumpfartigen Ventilkolbenabschnitt (30) des Ventilkolbendichtungsanfnahmebereiches befindet, wobei weiterhin der Ventilkolben (10) einen sich in Richtung des Kolbenraumes (70) an den kegelstumpfartigen Ventilkolbenabschnitt (30) des Ventilkolbendichtungsaufnahmebereiches anschließenden stirnflächigen Absatz (50) besitzt, und dass die wentilkolbensseitige Dichtlippe (40) der Dichtung (20) so bemessen ist, dass sie in montiertem Zustand in im wesentlichen paralleler Richtung zum Ventilkolben (10) kolbenraumseitig mit dem stirnflächigen Absatz (50) abschließt.

2. Ventilkolbenanordnung nach Anspruch 1,
**dadurch gekennzeichnet, dass** der Ventilkolben (10) in Richtung des Druckraumes (80) einen sich nach dem kegelstumpfartigen Ventilkolbenabschnitt (30) anschließenden zylindrischen Ventilkolbenabschnitt (35) sowie daran anschließend einen stirnflächigen Absatz (60) besitzt und dass die ventilkolbenseitige Dichtlippe (40) der Dichtung (20) so bemessen ist, dass sie in montiertem Zustand sich in im wesentlichen paralleler Richtung sich über den gesamten zylindrischen Ventilkolbenabschnitt (30,35) erstreckt und druckraumseitig mit dem stimflächigen Absatz (60) abschließt.

3. Ventil enthaltend eine Ventilkolbenanordnung gemäß der Ansprüche 1 bis 2.

4. Verfahren zur Montage eines Ventils nach Anspruch 3, welches zusätzlich einen Ventilsitz (100) umfasst,
**dadurch gekennzeichnet, dass** es die Schritte enthält, dass zunächst der Ventilkolben (10) in den Ventilsitz (100) eingeführt wird, anschließend die Dichtung (20) in den Ventilkolben (10) eingepresst wird und anschließend der Ventilkolben (10) mit Ventilsitz (100) und Dichtung (20) in das Ventilgehäuse eingepresst wird.

## Claims

1. A valve piston assembly, comprising a valve piston (10) and a seal (20), wherein the valve piston (10) has a valve piston seal receiving area associated with the seal (20) in the assembled state, and wherein the seal (20) has at least one sealing lip (42) on the side of the cylinder wall and one sealing lip (40) on the side of the valve piston, **characterized in that** the valve piston seal receiving area comprises a frusto-conical profile at least in a partial section thereof associated with the sealing lip (40) on the side of the valve piston in the assembled state, wherein the diameter of the valve piston becomes smaller in the direction of the piston space (70) and the sealing lip (40) on the side of the valve piston is biased or pre-compressed in the un-assembled state in such a way that, in the assembled state, it is in contact with the frusto-conical valve piston section (30) of the valve piston seal receiving area, wherein furthermore the valve piston (10) has an abutting shoulder (50) adjacent to the frusto-conical valve piston section (30) of the valve piston seal receiving area in the direction of the piston space (70), and **in that** the sealing lip (40) of the seal (20) on the side of the valve piston is sized such that, in the assembled state, it abuts against the abutting shoulder (50) on the side of the piston space in a direction essentially parallel to the valve piston (10).

2. The valve piston assembly according to claim 1,
**characterized in that** the valve piston (10) comprises, in the direction of the pressurized space (80), a cylindrical valve piston section (35) adjacent to the frusto-conical valve piston section (30) and, adjacent to it, an abutting shoulder (60), and **in that** the sealing lip (40) of the seal (20) on the side of the valve piston is sized such that, in the assembled state, it extends over the entire cylindrical valve piston section (30, 35) in an essentially parallel direction and abuts against the abutting shoulder (60) on the side of the pressurized space.

3. A valve comprising the valve piston assembly according to claims 1 to 2.

4. A method for assembling a valve according to claim 3, additionally comprising a valve seat (100),
**characterized in that** is has the following steps: at first, the valve piston (10) is inserted in the valve seat (100), then the seal (20) is pressed into the valve piston (10), and then the valve piston (10) with the valve seat (100) and the seal (20) is pressed into the valve housing.

## Revendications

1. Assemblage formant piston de vanne, comprenant un piston de vanne (10) et un joint (20), ledit piston de vanne (10) possédant une zone de réception pour joint de piston de vanne, qui est attribuée au joint (20) à l'état monté, et le joint (20) possède au moins une lèvre d'étanchement (42) du côté de la paroi du cylindre et une lèvre d'étanchement (40) du côté du piston de vanne,
**caractérisé en ce que** la zone de réception pour joint de piston de vanne, au moins dans un tronçon partiel qui, à l'état monté, est associé à la lèvre d'étanchement (40) du côté du piston de vanne, présente un profil analogue à un tronc de cône, le diamètre du piston de vanne devient plus faible en direction de l'espace à piston (70), et la lèvre d'étanchement (40) du côté du piston de vanne se trouve, à l'état non monté, sous une précontrainte telle que, dans l'état monté, elle se trouve en contact contre le tronçon du piston de vanne (30) en forme de tronc de cône dans la région de réception la zone de réception pour joint de piston de vanne, et le piston de vanne (10) possède en outre un talon (50) formant une surface frontale, qui se raccorde en direction de la chambre à piston (70) au tronçon de piston de vanne (30) en forme de tronc de cône, de la zone de réception pour joint de piston de vanne, et **en ce que** la lèvre d'étanchement (40), du côté du piston de vanne, du joint (20) est dimensionnée de telle manière que, à l'état monté, elle vient se raccorder au talon (50) formant une surface frontale, dans une direction essentiellement parallèle au piston de vanne (10), du côté de la chambre à piston.

2. Assemblage formant piston de vanne selon la revendication 1,
**caractérisé en ce que** le piston de vanne (10) possède, en direction de la chambre à pression (80), un tronçon de piston de vanne (35) cylindrique qui se raccorde après le tronçon de piston de vanne (30) en forme de tronc de cône, ainsi qu'un talon (60) formant surface frontale, qui s'y raccorde, et **en ce que** la lèvre d'étanchement (40), du côté du piston de vanne, du joint (20) est dimensionnée de telle manière que, dans l'état monté, elle s'étend en direction essentiellement parallèle sur la totalité du tronçon de piston de vanne cylindrique (30, 35) et se termine du côté chambre à pression par le talon (60) formant surface frontale.

3. Vanne comprenant un assemblage formant piston de vanne selon les revendications 1 à 2.

4. Procédé pour le montage d'une vanne selon la revendication 3, qui comprend en supplément un siège de vanne (100),
**caractérisé en ce qu'**il comprend les opérations selon lesquelles on introduit tout d'abord le piston de vanne (10) dans le siège de vanne (100), ensuite on enfonce à la presse le joint (20) dans le piston de vanne (10), et on enfonce ensuite à la presse le piston de vanne (10) avec le siège de vanne (100) et le joint (20) dans le boîtier de vanne.
